# EUROPEAN PATENT APPLICATION

(11) **EP 1 037 491 A1**
(43) Date of publication of application: **20.09.2000**
(21) Application number: 99400654.2
(22) Date of filing: 17.03.1999
(51) Int. Cl.: H04Q 7/38

(54) **A CDMA cellular communication system and method of access therefor**

(71) Applicant: Motorola Limited, Basingstoke, Hampshire RG22 4PD (GB)
(72) Inventor: Shakhgildian, Vagan, Bath, BA1 2Ly (GB); Burbidge, Richard, Hook, Hampshire RG27 9SX (GB); Whinnett, Nicholas, 75004 Paris (FR)
(74) Representative: Kopacz, William James

(57) **Abstract**

This invention relates to a CDMA cellular communication system. Known CDMA systems perform call access to only one base station. According to the current invention a subscriber unit comprises means for entering a multiple cell access mode (409). It furthermore comprise means (411,413) for transmitting two preamble parts (601) of a preamble message to two different base stations when in this mode. The subscriber unit subsequently detects acknowledge signals (603,605) from the two base stations and controls means (417) for transmitting a message part (609) of the access message in response to these acknowledge messages (603,605). Specifically, the transmit power levels of the message part (609) is set to enable communication to the corresponding base station if only one message is received and to both base stations if two acknowledge signals (603,605) are received. The invention is applicable to 3^{rd} generation cellular communication systems such as UMTS.

## Description

### Field of the Invention

This invention relates to a CDMA cellular communication system and method of access therefor, and in particular a cellular communication system for mobile communication.

### Background of the Invention

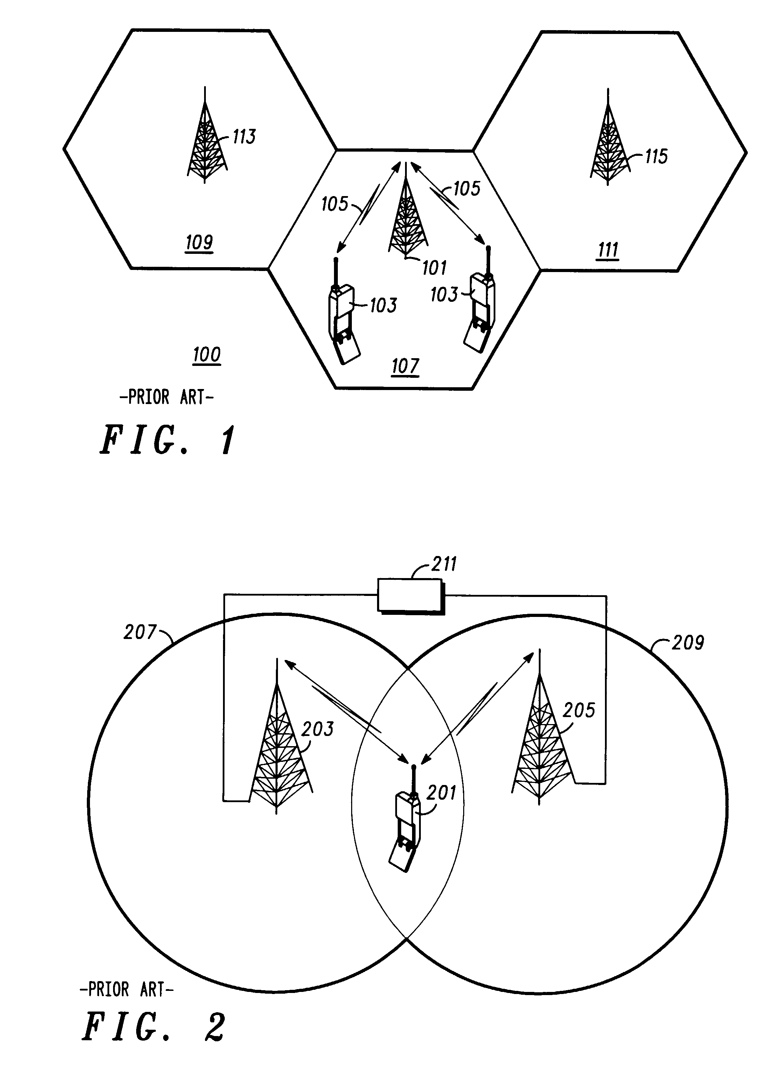

In a cellular communication system each of the subscriber units (typically mobile stations) communicates with typically a fixed base station. Communication from the subscriber unit to the base station is known as uplink and communication from the base station to the subscriber unit is known as downlink. The total coverage area of the system is divided into a number of separate cells, each predominantly covered by a single base station. The cells are typically geographically distinct with an overlapping coverage area with neighbouring cells. FIG. 1 illustrates a cellular communication system 100. In the system, a base station 101 communicates with a number of subscriber units 103 over radio channels 105. In the cellular system, the base station 101 covers users within a certain geographical area 107, whereas other geographical areas 109, 111 are covered by other base stations 113, 115.

As a subscriber unit moves from the coverage area of one cell to the coverage area of another cell, the communication link will change from being between the subscriber unit and the base station of the first cell, to being between the subscriber unit and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a subscriber unit is routed through the fixed network to the destination specific for this call. If the call is between two subscriber units of the same communication system the call will be routed through the fixed network to the base station of the cell in which the other subscriber unit currently is. A connection is thus established between the two serving cells through the fixed network. Alternatively, if the call is between a subscriber unit and a telephone connected to the Public Switched Telephone Network (PSTN) the call is routed from the serving base station to the interface between the cellular mobile communication system and the PSTN. It is then routed from the interface to the telephone by the PSTN.

A cellular mobile communication system is allocated a frequency spectrum for the radio communication between the subscriber units and the base stations. This spectrum must be shared between all subscriber units simultaneously using the system.

One method of sharing this spectrum is by a technique known as Code Division Multiple Access (CDMA). In a Direct Sequence CDMA (DS-CDMA) communication system, the signals are prior to being transmitted multiplied by a high rate code whereby the signal is spread over a larger frequency spectrum. A narrowband signal is thus spread and transmitted as a wideband signal. At the receiver the original narrowband signal is regenerated by multiplication of the received signal with the same code. A signal spread by use of a different code will at the receiver not be de-spread but will remain a wide band signal. In the receiver the majority of interference caused by interfering signals received in the same frequency spectrum as the wanted signal can thus be removed by filtering. Consequently a plurality of subscriber units can be accommodated in the same wideband spectrum by allocating different codes for different subscriber units. Codes are chosen to minimise the interference caused between subscriber units typically by choosing orthogonal codes when possible. A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 standardised in North America and the Universal Mobile Telecommunication System (UMTS) currently under standardisation in Europe.

Typically, CDMA communication systems use a handover technique known as soft hand over. In a soft handover, a subscriber unit is simultaneously served by more than one base station. FIG. 2 illustrates the situation where a subscriber unit 201 is in soft handover with two base stations 203, 205 each covering a cell 207, 209. In the uplink the signal received at each base station 203, 205 is communicated to a controller 211 where the signals are combined and the received data is recovered. In the downlink the data to be transmitted to the subscriber unit is communicated from the controller to both base stations 203, 205 and both base stations simultaneously transmit the data to subscriber unit 201. The subscriber unit 201 combines the two signals and demodulates the signal.

However, soft handovers are typically used when a subscriber unit is moving from one cell to another and is thus used for calls already in progress. Typically in CDMA systems, setting up a call is done by sending access messages to a base station. Based on the information and the characteristics of the received access message, the fixed network sets up a call to the base station. When the call is in progress the subscriber unit may then subsequently enter a soft handover mode. In summary, in the known CDMA random access method the mobile always communicates with a single base station, and this base station is selected on the basis of the maximum downlink pilot strength. Therefore, at cell edges and in other areas with a strong inter-cell interference, the mobile first establishes a connection with one base station and only then starts preparation and execution of soft handover.

This approach has a number of disadvantages. One disadvantage is that macrodiversity between more than one cell is not utilised, i.e. only the signal received at one base station is considered even if the access message can be received at other base stations. Furthermore, the approach does not permit the subscriber unit to enter soft handover straight away at call set-up. This subscriber unit thus have to first set-up a call, then consider whether a soft handover is appropriate and if so it has to await available resource and perform the necessary signalling before the soft handover mode can be entered. This is a slow process and results in an inefficient usage of resource and a potentially reduced quality of service for the communication.

### Summary of the Invention

The inventors of the current invention have realised that conventional approaches for performing call set-up in a CDMA cellular communication system are suboptimal and can be improved. The invention seeks to provide an improvement in the call set-up process and specifically it seeks to improve the access message reception performance and improve the speed and efficiency of entering soft handover at call set-up.

Accordingly there is provided a subscriber unit for a CDMA cellular communication system comprising means for entering a multiple cell access mode means for transmitting a first preamble part of an access message to a first base station; means for transmitting a second preamble part of the access message to a second base station when in said multiple cell access mode; means operable to receive acknowledge messages from the first and second base station when in said multiple access mode; and means for transmitting a message part of the access message with a characteristic set in response to the received acknowledge messages.

Preferably, the characteristic set in response to the received acknowledge messages is a transmit power level and the means operable to receive acknowledge messages from the first and second base station is operable to independently receive a first acknowledge message from the first base station and a second acknowledge message from the second base station and the characteristic is set to enable communication to the first base station if the first acknowledge message is received, to the second base station if the second acknowledge message is received and to both the first and the second base station if both the first and the second acknowledge messages are received.

Alternatively, the means operable to receive acknowledge messages from the first and second base station is operable to receive a combined acknowledge message by combining the received acknowledge messages and the first characteristic is set to enable communication to both base stations if a combined acknowledge message is received.

According to a second aspect of the invention there is provided a cellular communication system having a fixed network with at least a first and a second base station and comprising at least one subscriber unit as described above.

According to a third aspect of the invention there is provided a method of multiple cell access in a CDMA cellular communication system comprising the steps of:
transmitting a first preamble part of an access message to a first base station;
transmitting a second preamble part of the access message to a second base station when in said multiple cell access mode; receiving acknowledge messages from the first and second base station when in said multiple access mode; and transmitting a message part of the access message with a characteristic set in response to the received acknowledge messages.

The invention thus provides an improvement in the call set-up process and specifically it improves the access message reception performance and the speed and efficiency of entering soft handover at call set-up. It achieves these objectives without significant increases in the equipment complexity, and in particular it avoids multi-code transmission at the mobile and/or extra access message detectors at the base station.

### Brief Description of the Drawings

An embodiment of the present invention is described below, by way of example only, with reference to the Drawings, in which:
FIG. 1 is an illustration of a cellular communication system according to prior art;
FIG. 2 is an illustration of a soft handover in a cellular communication system according to prior art;
FIG. 3 is an illustration of a cellular communication system to which the current invention is applicable;
FIG.4 is an illustration of an embodiment of a subscriber unit in accordance with the current invention;
FIG. 5 shows the flow chart of an example of a method of accessing a cellular communication system in accordance with the current invention; and
FIG. 6 illustrates an example of time slot synchronisation in accordance with an aspect of the current invention.

### Detailed Description of a Preferred Embodiment

The following description focuses on an embodiment compliant with the current approach for the standardisation of UMTS but it will be apparent that the invention is not limited to this application.

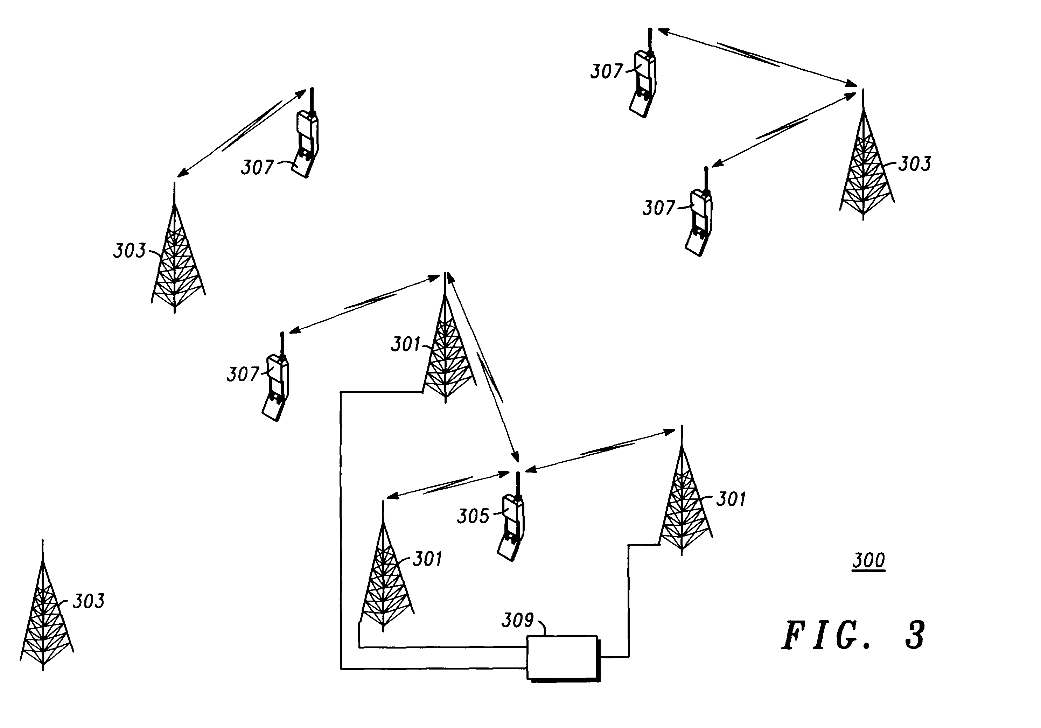

FIG. 3 illustrates a UMTS communication system 300 to which the present invention is applicable. The communication system 300 comprises a large number of base stations 301, 303 serving a large number of subscriber units 305, 307. Typically, the base stations 301,303 will each cover a different geographical area although these areas typically will overlap. The base stations 301, 303 support a large number of subscriber units 305, 307 over radio channels 309, each subscriber unit 305,307 mainly being supported by the most appropriate base station 301,303 which is often the closest base station 301,303. When handing over from one cell to another, the subscriber unit 305, 307 can simultaneously be served by a plurality of base stations 301,303. This is known as a soft handover and is illustrated in FIG. 3 where the subscriber unit 305 is in soft handover with the base stations 301. The base stations suitable for a soft handover are in UMTS known as an active set.

In a soft handover, the signals received from the subscriber unit 305 at each of the base stations 301 are relayed to combining means via the fixed network. The combining means combines the plurality of signals and generates the received data sequence. In the embodiment illustrated in FIG. 3, the central controller 309 contains combining means for receiving signal data received by the base stations 301 from the subscriber unit 305. Similarly the central controller 309 contains means for receiving a data sequence to be transmitted to the subscriber unit 305 and for distributing it to the appropriate base stations 301.

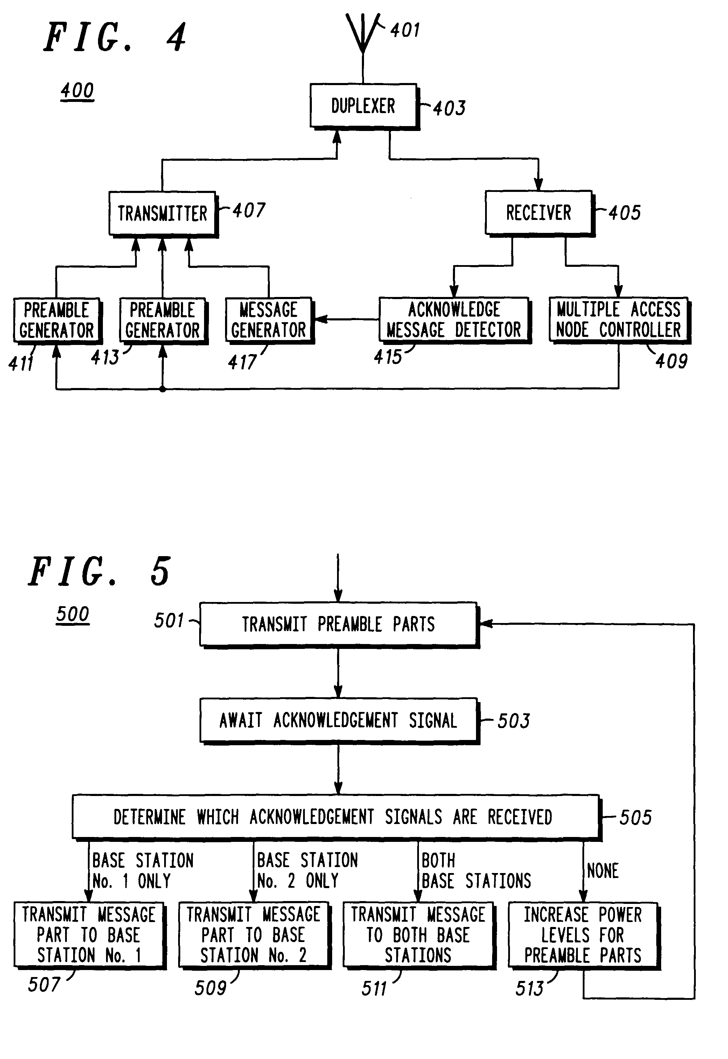

FIG. 4 illustrates an embodiment of the subscriber unit 400 in accordance with the invention. The subscriber unit 400 comprises an antenna 401 connected to a duplexer 403. The duplexer provides a receive signal to the receiver 405. A transmitter 407 is connected to the duplexer which feeds the transmit signal to the same antenna 401 used for reception. The receiver receives the downlink transmissions from the base station and demodulates and provides the data the user as is well known in the art. In addition the receiver provides measurements to means 409 for determining if the subscriber unit should enter a multiple access mode. These means 409 control means 411 for transmitting a first preamble part of an access message to a first base station and means 413 for transmitting a second preamble part of the access message to a second base station when in said multiple cell access mode. These preamble transmission means 411,413 are connected to the transmitter 407 and use this for the transmission.

The receiver 405 is also connected to means 415 operable to receive acknowledge messages from the base stations with which the subscriber unit is in soft handover. These means 415 further control means 417 for transmitting a message part of the access message.

In operation the subscriber unit determines will determine whether it should be in a multiple cell access mode or not. In the multiple cell access mode the subscriber unit will access the system for call setup through more than one base station. In the following description it is assumed that the subscriber unit accesses the communication system through two base stations although the invention is equally applicable to more base stations.

The subscriber unit can determine that a multiple cell access is appropriate based on measurements of for example the downlink pilot signal. In this case the subscriber unit determines that multiple cell access is appropriate when more than one downlink pilot signal is received above a first threshold yet no pilot signal is received above a second higher threshold. Other methods include basing the decision on downlink signal to noise ratio or on combined uplink and downlink signal to noise ratio. The determination of multiple cell access is equivalent to determining when soft handover is applicable and any method known in the art can be used without detracting from the current invention.

In UMTS and many of the other present and next generation cellular mobile systems use a random access channel (RACH) to set up mobile calls. In UMTS, the physical RACH (PRACH) channel is used not only to set up calls, i.e. to send requests for a dedicated traffic channel, but also to transmit short data packets

Each random access burst or access message in UMTS consists of 1 ms preamble, an idle period and a 10 ms message part which carries the information on mobile ID, type of service requested and (in case of data packet transmission) the data packet. The idle period is necessary for the RACH detector in the base station to process the preamble and to send an preamble acknowledge message to the subscriber unit.

The reference timing to the mobiles is provided by 10 ms long frames. There are 8 access time slots per 10 ms and also 16 signature codes in each slot, that is 128 access positions per 10 ms in total. A preamble spreading code is cell specific, but the set of overlaid 16 signature codes is the same in all cells. A description of spreading and scrambling applied in the PRACH burst can be found in European Telecommunication Standards Institute, UMTS XX.05 UTRA FDD, Spreading and Modulation Description. Version 0.4.0. The spreading modulation in the PRACH preamble is BPSK (Binary Phase Shift Keying), whilst the message employs QPSK (Quaternary Phase Shift Keying). The 10 ms long PRACH message consists of data part, transmitted on channel I, and control part, transmitted on channel Q. The PRACH message uses a cell specific long complex scrambling code.

According to an embodiment of the invention, preamble parts of the RACH access message are sent to both cells when the subscriber unit is in the multiple cell access mode. Each of the base stations detect the corresponding preamble and then transmits an independent acknowledgement command to the subscriber unit. By adopting this procedure, it is possible to obtain certain a macro diversity gain even without combining the preamble detection results in the network. The system will be more resilient to fast fading in both uplink (where the PRACH preamble is sent) and in the downlink (where the acknowledge commands are sent). Alternatively, it is possible to soft combine the preamble parts in the fixed network. In soft combining the signals received in different parts of the network are communicated to a processor which generates a received signal based on more than one received signal. A simple soft combining is selection combining where the received signals, in this case it can be the demodulated data, are compared and the signal having the lowest data rate is selected whereas all other signals are ignored. Another more complex form of soft combining is to add the received channel symbol samples from different base stations and performing the decoding and error correction on the combined signal. Any other known method for soft combining can be substituted without detracting from the current invention.

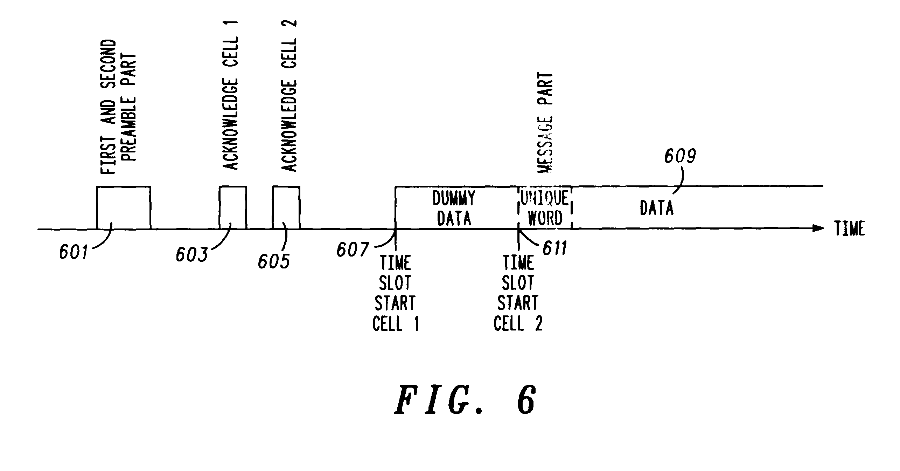

A flow chart 500 of the approach of the subscriber unit in a multiple cell access is shown in FIG. 5.

In step 501 the subscriber unit chooses the initial transmit powers independently for preamble part 1 and preamble part 2 corresponding to a first and second base station identified as targets for the multiple cell access. It then transmits the two preamble parts to the corresponding base stations

In step 503 the subscriber unit waits for acknowledge signals to be received from the base stations.

In step 505 it determines which acknowledge signals have been received. As shown in Figure 5, there are four possible outcomes of the access procedure:
1) Step 507, only acknowledge from the first base station is received. In this case the subscriber unit transmits the message part of the preamble only assuming that the first base station will receive the message. It will thus set the characteristics of the message part transmission to specifically be applicable for communication with this base station. Specifically the transmit power is set as P1 + Δ1, where P1 is the transmit power of the preamble part and Δ is a specified (positive or negative) power difference between the preamble and the message, which is pre-determined for every data rate in the message and possibly for different deployment scenarios.
2) Step 509, only acknowledge from the second base station is received. In this case the subscriber unit transmits the message part of the preamble only assuming that only the second base station will receive the message. As in step 507, it will thus set the characteristics of the message part transmission to specifically be applicable for communication with this base station.
3) Step 511, Acknowledge messages from both base stations are received. The subscriber unit in this case transmits the message part of the access message assuming that the signal will be received at both base stations. Specifically, the transmit power is set to max {P1, P2} + Δ2, i.e. to the highest power level of the two preamble part power level plus a predetermined offset. Dedicated channels are then assigned to the subscriber unit in both cells simultaneously, and the mobile enters soft handover at call set-up.
4) Step 513, No acknowledge signal is received from either base station. In this case the subscriber unit will increase the power level for both preamble parts and attempt to access the base stations again. The procedure will be repeated until acknowledge messages are received or until a pre-determined number of retries have been carried out.

A benefit of sending the preambles to two bases is in the diversity gain - if one propagation path is degraded by a fast fade and the preamble is not detected in this base receiver, the likelihood is that the other path will remain good and the second base receiver will successfully detect the preamble.

In the above described embodiment the acknowledge messages from the first and second base station are independently received and the characteristic is set in response to the individually detected acknowledge messages. In an alternate embodiment the receive acknowledge messages from the first and second base station are soft combined in the subscriber unit and if the combined signal is above a certain threshold this is taken to indicate that an acknowledge signal has been received and the message part of the access message is transmitted assuming that both base stations are able to receive the transmitted signal. Specifically the transmit power level is set to allow reception at both base stations. In this embodiment the acknowledge messages from the two base stations are thus processed jointly rather than independently.

According to one embodiment, the mobile sends a preamble part first to cell 1 and then to cell 2. Each preamble uses its own cell specific spreading code, but the pseudorandom selection of the access slot/signature is obviously done only once. Therefore, both preambles employ the same signature and also their access time slots are linked. Acknowledgements arrive on two separate physical channels (one per cell), which the mobile is expected to demodulate. The ability to demodulate two rather than one acknowledge channels is the only extra complexity required by the scheme in the mobile, whilst the base detector performs its normal preamble detection procedures and the extra complexity there is very small or even zero.

However, in the preferred embodiment, the preamble parts are transmitted as BPSK channels on the quadrature channels of a QPSK signal. Thus the preamble part for the first base station is transmitted as a BPSK signal on the In-phase channel and the preamble part for the second base station is transmitted as a BPSK signal on the Quadrature channel of a QPSK signal. This scheme has a benefit of reducing the maximum idle period as the preamble parts can be transmitted simultaneously.

In the described embodiments, the transmission of the message part is different than transmission of the preamble parts. Although sequential transmission of the message parts to the two base stations is feasible it will result in an increased idle period which is disadvantageous in most communication systems. Also, although simultaneous transmission using higher order modulation schemes are possible it is not applicable to communication systems such as UMTS which specifically prescribes that QPSK is used for the message part of the PRACH.

Therefore in the preferred embodiment the same message part is of the PRACH is simultaneously transmitted to both base stations.

Hence, in the preferred embodiment the PRACH message part is sent at a transmit power level, which is the greater of the two required power levels. This ensures that the message part can be received at both base stations.
Alternatively, as the message part is received by two base stations there will be a macrodiversity gain from soft combining of the RACH messages in the network. Therefore the necessary power level can be reduced with respect to the maximum required power level while still enabling reception at both base stations.

UMTS and similar communication systems have different scrambling codes in RACH messages for different base stations. In the preferred embodiment, however, one code in the family of uplink scrambling codes is assigned to be not cell specific, but common for all cells. This common code is used only for the purpose of multiple cell access and soft handover. Naturally, the base station receiver needs to know that a particular mobile is going to use the common (rather than cell specific) scrambling code in its PRACH message. Therefore, in the preferred embodiment, one or more preamble signatures are dedicated for the multiple cell access mode. When one of the allocated signatures is detected, the base station expects the common scrambling code in the message part. It is apparent that there can be more than one common scrambling code (e.g. one per signature allocated to soft handover). Also, a certain number of access time slots is another resource which can be allocated for the multiple cell access mode.

According to this embodiment, the subscriber unit in multiple cell access mode selects a preamble signature and/or time slot allocated for this mode, and then uses the common scrambling code for the message even if only one of the two acknowledgements was detected. The message is in this case expected in one base station only. In this multiple access mode with two target base stations the subscriber unit will always transmit two preamble parts but only one message part.

In UMTS the base stations will typically not be synchronised. The beginning of frames, timeslots, symbols and chips will thus typically not coincide for different cells. The subscriber unit selects the timing of the preambles and the message transmission in such a way that they can be successfully detected in both cells. This is accomplished in the following way in the specific example of UMTS. In UMTS, the access timing and therefore the timing offset between the cells can be expressed in terms of a number of 10 ms long frames, a number of time slots (1.5 ms long), a number of 256 chip long symbols and a number of 1/(4096 kHz) long chips. Differences in the frame numbers will not affect the access procedures in UMTS and neither do differences in the time slot. It follows that the main problem is the difference between access time slot boundaries between the cells. In UMTS, the timing of the detected RACH preamble determines the expected timing of the RACH message in the base receiver. If the RACH preamble sent to each base station is time aligned with the time slot boundary of one of the cells, then the preamble detectors in all other cells will perceive the difference between time slot timing as an extra propagation delay. All preambles can still be detected provided that this perceived extra delay is within the detector's search window. With a maximum time slot difference between time slot timing equal half of a slot, i.e. 0.75 ms, the latter condition may not hold. Therefore according to one aspect of the invention the preambles timings are aligned with a 62.5 us symbol boundary, which reduces the perceived extra delay to ½ symbol, i.e. 31.25 us, which is within the search window of a typical base station implementation.

The remaining component of the timing offset between the two base stations equals an integer number symbols. In the preferred embodiment the transmission of the message part starts at the earliest of the two slot boundaries. This is illustrated in FIG. 6 where a preamble part of the access message 601 is sent to the first and second base station, acknowledge messages 603,605 are then received from the two base stations. At the time slot starting time 607 of the earliest base station the subscriber unit starts transmitting the message part 609. The subscriber unit is thus time slot synchronised to the first cell. Initially the subscriber unit transmits dummy symbols (e.g. zeros) until the time slot starting time 611 of other base station comes along. After that, the subscriber unit sends a unique word (e.g. 7 symbols) to indicate the start of the data portion of the message part. In this way the subscriber unit is also time slot synchronised to the second base station.

The current invention thus provide many advantages including the benefits of macro diversity gain in the access procedure a faster set up of soft handover. This is furthermore achieved with each base station having only one preamble detector, and without requiring multi-code transmission in the subscriber unit.

## Claims

1. A subscriber unit for a CDMA cellular communication system comprising
means (409) for entering a multiple cell access mode
means (411) for transmitting a first preamble part (601) of an access message to a first base station;
means (413) for transmitting a second preamble part (601) of the access message to a second base station when in said multiple cell access mode;
means (415) operable to receive acknowledge messages (603,605) from the first and second base station when in said multiple access mode; and
means (417) for transmitting a message part (609) of the access message with a characteristic set in response to the received acknowledge messages.

2. A subscriber unit for a CDMA cellular communication system as claimed in claim 1, wherein comprising the characteristic set in response to the received acknowledge messages (603,605) is a transmit power level.

3. A subscriber unit for a CDMA cellular communication system as claimed in claim 1 or 2, wherein the means (415) operable to receive acknowledge messages (603,605) from the first and second base station is operable to independently receive a first acknowledge (603) message from the first base station and a second acknowledge message (605) from the second base station and the characteristic is set to enable communication to the first base station if the first acknowledge message (603) is received, to the second base station if the second acknowledge message (605) is received and to both the first and the second base station if both the first and the second acknowledge messages (603,605) are received.

4. A subscriber unit for a CDMA cellular communication system as claimed in claim 1 or 2, wherein the means (415) operable to receive acknowledge messages from the first and second base station is operable to receive a combined acknowledge message by combining the received acknowledge messages (603, 605) and the first characteristic is set to enable communication to both base stations if a combined acknowledge message is received.

5. A subscriber unit for a CDMA cellular communication system as claimed in any previous claim wherein the first preamble part (601) is transmitted as a BPSK signal on the In-phase channel of a QPSK signal and the second preamble part (601) is transmitted as a BPSK signal on the quadrature channel of a QPSK signal.

6. A subscriber unit for a CDMA cellular communication system as claimed in any previous claim wherein the first preamble part (601)is transmitted at a first power level determined to enable communication with the first base station and the second preamble' part (601) is transmitted at a second power level determined to enable communication with the second base station

7. A subscriber unit for a CDMA cellular communication system as claimed in any previous claim, operable to begin transmission of the message part substantially time slot synchronised with the first base station and to transmit dummy symbols until substantially time slot synchronised with the second base station.

8. A subscriber unit for a CDMA cellular communication system as claimed in claim 8, wherein the subscriber unit transmits a unique word following the dummy symbols whereby the start of a data part of the message part can be determined by detection of the unique word.

9. A CDMA cellular communication system having a fixed network with at least a first and a second base station and comprising at least one subscriber unit as claimed in any previous claim 1 to 8.

10. A CDMA cellular communication system as claimed in claim 9 wherein at least the message part (609) of the access message is soft combined in the fixed network

11. A CDMA cellular communication system as claimed in claim 9 or 10, wherein the subscriber unit is operable to continue communication following the access message in a soft handover mode with the first and second base station.

12. A CDMA cellular communication system as claimed in any of the claims 9 to 11, wherein the message part (609) is transmitted on a scrambling code common to the first and second base station when the subscriber unit is in the multiple cell access mode.

13. A method of multiple cell access in a CDMA cellular communication system comprising the steps of:
transmitting a first preamble part (601) of an access message to a first base station;
transmitting a second preamble part (601) of the access message to a second base station when in said multiple cell access mode;
receiving acknowledge messages (603,605) from the first and second base station when in said multiple access mode; and
transmitting a message part (609) of the access message with a characteristic set in response to the received acknowledge messages.
